# EUROPÄISCHE PATENTSCHRIFT

(11) **EP 1 111 092 B1**
(45) Veröffentlichungstag und Bekanntmachung des Hinweises auf die Patenterteilung: **02.03.2005**
(21) Anmeldenummer: 00120298.5
(22) Anmeldetag: 28.09.2000
(51) Int. Cl.: C23F 11/12, C09K 5/20, C09K 5/00, C23F 11/10

(54) **Benzoat enthaltende wässrige Motoreinlauf-Kühlflüssigkeit mit Dampfraumkorrosionsschutz**
Aqueous engine running-in coolant with benzoate for corrosion protection of vapour compartment
Agent de refroidissement aqueux à benzoate pour rodage de moteurs à combustion et protection anti-corrosion des compartiments à vapeur

(30) Priorität: 23.12.1999 DE 19962757
(43) Veröffentlichungstag der Anmeldung: 27.06.2001
(73) Patentinhaber: BASF AKTIENGESELLSCHAFT, 67056 Ludwigshafen (DE)
(72) Erfinder: Wenderoth, Bernd, Dr., 69488 Birkenau (DE); Meszaros, Ladislaus, 67069 Ludwigshafen (DE); Nitzschke, Uwe, 67071 Ludwigshafen (DE)
(74) Vertreter: Isenbruck, Günter, Dr.

(56) Entgegenhaltungen:
- WO-A-00/22190
- DD-A- 218 635
- DE-A- 3 000 687
- DE-A- 19 625 692
- PATENT ABSTRACTS OF JAPAN vol. 1997, no. 02, 28. Februar 1997 (1997-02-28) & JP 08 269751 A (NIPPON CHEM KOGYO KK), 15. Oktober 1996 (1996-10-15)
- DATABASE WPI Section Ch, Week 200006 Derwent Publications Ltd., London, GB; Class A97, AN 2000-069826 XP002157883 & RU 2 115 685 C (KHIMTEKH INZHINIRING STOCK CO), 20. Juli 1998 (1998-07-20)

## Beschreibung

Die vorliegende Erfindung betrifft das Gebiet der Kraftfahrzeuganwendungstechnik. Genauer gesagt, betrifft die vorliegende Erfindung ein wässriges Kühlmittel für die Motorspülstreckenkonservierung, das gute Dampfraumkorrosionsinhibitoreigenschaften durch den Zusatz von Salzen von gegebenenfalls alkylsubstituierter Benzoesäure aufweist und das während der Einlaufphase neu gebauter Motoren eingesetzt wird.

Neu gebaute Motoren werden generell nach dem Zusammenbau kurzen Probeund Testläufen unterzogen. Die dabei benutzten Kühlmittel sind solche auf Ölbasis oder auf Basis von Monoethylenglykol oder Monopropylenglykol. Häufig wird aus Kostengründen auf die üblichen, in Kraftfahrzeugen verwendeten Kühlmittelkonzentrate zurückgegriffen, die dann noch weiter verdünnt werden.

Nach erfolgreicher Einlaufphase wird dann das Kühlmittel abgelassen und der Motor bis zum endgültigen Einbau in das Fahrzeug zwischengelagert. Dabei treten häufig Korrosionsprobleme auf, da die sogenannte Motorspülstrecke, also die Kühlkanäle, immer noch Reste des Kühlmittels enthält. Durch Verdampfen entsteht dann innerhalb der Motorspülstrecke eine Atmosphäre mit einer erhöhten Feuchtigkeit. Diese Feuchtigkeit kann nicht oder nur sehr langsam entweichen. Solche Atmosphären sind stark korrosionsfördernd, wodurch während der erwähnten Lagerung der Motoren vielfach Korrosion in unterschiedlichem Grad und teilweise in verschiedenen Arten beobachtet werden kann.

Insbesondere in modernen Verbrennungsmotoren werden Temperaturbelastungen erreicht, die hohe Anforderungen an die verwendeten Materialien stellen. Jede Art und jegliches Ausmaß von Korrosion stellen dabei einen potentiellen Risikofaktor dar und können zur Verkürzungen der Laufzeit des Motors und zur Erniedrigung der Zuverlässigkeit führen. Weiterhin werden in modernen Motoren zunehmend eine Vielzahl von unterschiedlichen Materialien verwendet, beispielsweise Kupfer, Messing, Weichlot, Stahl sowie Magnesium- und Aluminiumlegierungen. Durch diese Vielzahl an metallischen Materialien entstehen zusätzlich potentielle Korrosionsprobleme, insbesondere an den Stellen, an denen verschiedene Metalle in Kontakt zueinander stehen.

Es besteht daher ein Bedarf an Kühlmitteln, mit denen eine effektive Konservierung der Motorspülstrecke bei Motoren nach dem Ablassen des Kühlmittels nach erfolgter Einlaufphase ermöglicht wird. Voraussetzung dafür ist ein sehr guter Korrosionsschutz des Dampfraums.

Im Stand der Technik finden sich Referenzen, die allgemein Dampfraumkorrosionsinhibitoren beschreiben.

Die DE 184 725 offenbart die Verwendung von Nitriten der Alkali- und Erdalkalimetallmetalle in Kombination mit Phosphaten sekundärer Amine in korrosionsverhinderndem Verpackungsmaterial.

Von E.G. Stroud und W.H.J. Vernon wird in J.Appl.Chem. 2, 1952, Seite 166 bis 172 die Verbindung von Natriumbenzoat in Verpackungsmaterialien als Korrosions-inhibitor beschrieben.

Die DD-P-14 440 offenbart ein korrosionsschützendes Verpackungsmittel, bei dem Ammoniumnitrite zusammen mit kationenaktiven Netzmitteln aufgebracht wurden.

DE-AS-2 141 393 beschreibt ein korrosionsverhinderndes Verpackungsmaterial, das ein Papiermaterial mit einer bestimmten Faserlänge aufweist, als Inhibitor werden öllösliche Produkte der erdölchemischen Synthese verwendet, vorzugsweise Salze der Benzoesäure.

In der US 4,124,549 findet sich die Beschreibung der Verwendung von Salzen bestimmter Carbonsäuren, darunter Benzoesäure, mit organischen Aminen als Dampfraumkorrosionsinhibitor. Die Salze werden in ein thermoplastisches Harz eingearbeitet, das nach Extrusion als Verpackungsmaterial verwendet wird.

Alle oben genannten Referenzen offenbaren Dampfraumkorrosionsinhibitoren, die in/oder auf Verpackungsmaterialien angebracht werden.

Andere Referenzen offenbaren Korrosionsinhibitoren mit Dampfraumkorrosionsschutzwirkung, die allgemein zur Korrosionsverhinderung in metallischen Innenräumen verwendet werden können.

In der DD-P-298 662 ist dies z.B. eine Mischung bestehend aus 2,1 bis 250 g/l Ammoniumbenzoat, 0,5 bis 60 g/l p-Hydroxybenzoesäureester, 1 bis 120 g/l Benzotriazol und 0,4 bis 50 g/l Dimethylaminoethanol, in der EP-A-221 212 wird eine dampfraumkorrosionshemmende, wässrige Mischung, enthaltend ein Alkylenglykol, gegebenenfalls ein Polyoxyalkylenglykol und als Korrosionsinhibitor ein Polyoxyalkylenamin mit einem bestimmten Gewichtsverhältnis von Oxyethylen und und Oxypropylen vorgeschlagen.

Beim Studium der oben genannten Referenzen fällt auf, daß häufig Benzoate in Kombination mit anderen Substanzen in den die Dampfraumkorrosion verhindernden Mischungen verwendet werden.

Die Verwendung von Benzoaten in Kühlflüssigkeiten von Verbrennungsmotoren ist seit langem bekannt. Jedoch sind diese Flüssigkeiten so formuliert, daß sie zur Verhinderung von Korrosion im Flüssigkeitsraum verwendet werden.

So beschreibt die WO 97/30133 korrosionsinhibierende Mischungen für den Einsatz als Kühlmittel in Verbrennungsmotoren, die als wirksamen Inhaltsstoff quaternierte Imidazole enthalten. Als weitere Komponenten, die vorhanden sein können, werden u.a. die Natriumsalze von Benzoesäure erwähnt. Diese Mischungen dienen zur Verhinderung von Korrosion, die im Flüssigkeitsraum der Kühlkanäle von Verbrennungsmotoren auftreten kann.

Korrosionsinhibierende Mischungen, die ebenfalls zur Verhinderung von Korrosion im Flüssigkeitsraum der Kühlkanäle von Verbrennungsmotoren eingesetzt werden, sind auch in der EP-A-816 467 offenbart. Die dort beschriebenen Mischungen enthalten 0,5 bis 10 Gewichtsprozent einer Carbonsäure mit 3 bis 16 C-Atomen in Form von deren Akalimetall-, Ammonium- oder substituierten Ammoniumsalzen und 0,01 bis 3 Gewichtsprozent mindestens eines Kohlenwasserstofftriazols und/oder Kohlenwasserstoffthiazols, insbesondere Benzotriazol und/oder Tolutriazol. Als Carbonsäure kann u.a. Benzoesäure verwendet werden. Die Mischungen, die als Gefrierschutzmittelkonzentrate vorliegen, sind silikat-, borat- und nitratfrei.

Schließlich beschreibt die US 4,711,735 eine komplexe Mischung zur Verhinderung von Korrosion und Ablagerungen in Kühlsystemen von Verbrennungsmotoren. Diese Mischung enthält 0,017 bis 0,42 % Rizinolsäure, 0,007 bis 0,083 % Benzotriazol, 0,5 bis 1,5% Mercaptobenzothiazol, 0,17 bis 4% Styrolmaleinsäureanhydrid eines Molekulargewichts von 200 bis 3500, 0,42 bis 2% Benzoesäure, 0,42 bis 4,0% eines Salzes der Benzoesäure, 0,33 bis 3,3% Nitrit, 0,37 bis 3,7% Nitrat und 0,42 bis 3% Carboxymethylmercapto-bernsteinsäure. Die Korrosion im Flüssigkeitsraum soll damit verhindert werden, wobei auch erwähnt wird, daß ein die Dampfraumkorrosion inhibierender Effekt auftreten kann.

Die WO 00/22190 offenbart ein Konzentrat zur Herstellung eines Motoreneinlaufmittels durch Verdünnung mit Wasser, das als Hauptkomponente ein wasserlösliches flüssigallcoholisches Gefrierpunkterniedrigungsmittel sowie weiterhin eine wirksame Menge eines oder mehrerer Ammoniumsalze von Carbonsäuren mit 5 bis 18 C-Atomen enthält. Weiterhin können 0,005 bis 10 Gew.-% einer oder mehrerer Carbonsäuren aus der Gruppe der linearen gesättigten und ungesättigten aliphatischen, araliphatischen oder aromatischen ein- oder mehrbasischen Carbonsäuren mit 4 bis 20 C-Atomen vorhanden sein.

Die im Stand der Technik beschriebenen korrosionsverhindernden wässrigen Kühlmittel sind jedoch entweder nicht geeignet, eine Motorspülstrecke nach Ablassen des Kühlmittels vor Dampfraumkorrosion zu schützen, oder die Mischungen sind zu aufwendig und zu teuer.

Die Aufgabe der vorliegenden Erfindung ist daher, ein wässriges Kühlmittel für Verbrennungsmotoren bereitzustellen, das eine effektive Dampfraumkorrosionsinhibierung ermöglicht in Motorspülstrecken, aus denen das Kühlmittel entfernt wurde und die anschließend gelagert werden. Dieses Kühlmittel soll neben einer ausreichenden Korrosionsinhibitoraktivität kostengünstig und lediglich durch geringe Manipulationen an handelsüblichen Kühlflüssigkeiten bzw. Kühlmittelkonzentraten für Verbrennungsmotoren erhältlich sein.

Diese Aufgabe wird gelöst durch die Verwendung von Alkalisalzen der Benzoesäure oder von alkylsubstituierter Benzoesäure als Dampfraumkorrosionsinhibitor in wässrigen Kühlmitteln bei der Einlaufphase von Verbrennungsmotoren, bei denen das Kühlmittel nach der Einlaufphase aus dem Kühlkreislauf des Motors abgelassen wird.

Diese Aufgabe wird weiterhin gelöst durch ein wässriges Kühlmittel mit dampfraumkorrosionsinhibierenden Eigenschaften für die Einlaufphase von Verbren-nungsmotoren, nach denen das Kühlmittel abgelassen wird, enthaltend ein Alkalisalz von Benzoesäure oder einer alkylsubstituierten Benzoesäure neben den üblichen Begleit- und Hilfsstoffen.

Es wurde gefunden, daß durch den Zusatz von Alkalisalzen der Benzoesäure oder von alkylsubstituierter Benzoesäure zu Kühlmitteln eine äußerst effektive Konservierung der Motorspülstrecke und somit ein Verhindern von Dampfraumkorrosion erreicht werden kann. Dieser Effekt der Konservierung tritt dann ein, wenn das Kühlmittel aus dem Kühlkreislauf abgelassen wird, etwa nach der Einlaufphase, und der Motor anschließend gelagert wird.

Die Salze der Benzoesäure oder der alkylsubstituierten Benzoesäure sind die Salze von Alkalimetallen, also Lithium, Natrium, oder Kalium. Die Verwendung von Natriumsalzen ist bevorzugt. Erfindungsgemäß können die oben genannten Salze der unsubstituierten Benzoesäure oder auch solche einer alkylsubstituierten Benzoesäure verwendet werden. Die alkylsubstituierte Benzoesäure kann dabei einen oder mehrere Alkylsubstituenten aufweisen. Beispiele für gängige, geeignete Alkylgruppen sind Methyl-, Ethyl-, n-Propyl-, i-Propyl-, n-Butyl-, tert-Butyl und i-Butylgruppen. Dies Gruppen können gegebenenfalls substituiert sein durch einem Fachmann bekannte, geeignete Substituenten.

Die erfindungsgemäßen Salze liegen in dem wässrigen Kühlmittel, das in die Kühlkanäle des Motors eingefüllt wird, in Konzentrationen von 0,1 bis 0,8 Gewichtsprozent vor. Ein bevorzugter Konzentrationsbereich liegt bei Werten von 0,2 bis 0,4 Gewichtsprozent. Die verwendeten Kühlmittel können die üblichen, einem Fachmann bekannten Begleit- und Hilfsstoffe enthalten. Dies sind beispielsweise Monoethylenglykol, Monopropylenglykol, Mono- und Dicarbonsäuren und deren Salze, Triazolderivate, Imidazolderivate, Silikate, Nitrite, Nitrate, Phosphate, Alkalihydroxide, Thiazolderivate, Pyrrolidonderivate, Polyacrylate, Salze von Erdalkalimetallen, Molybdate, Wolframate, Phosphonate und Borate.

Die erfindungsgemäßen Kühlmittel mit Dampfraumkorrosionsinhibitorwirkung werden am einfachsten aus den gängigen, kommerziell erhältlichen Kühlmitteln durch entsprechendes Verdünnen und Zufügen des erfindungsgemäßen Salzes hergestellt. Die erfindungsgemäßen Kühlmittel enthalten Wasser in einem Anteil von 85 bis 95 Gewichtsprozent, vorzugsweise 90 bis 95 Gewichtsprozent.

Durch einfachen Zusatz der erfindungsgemäßen Salze lassen sich Kühlmittel mit einer ausgeprägten Dampfraumkorrosionsinhibitorwirkung erhalten. Solche Kühlmittel lassen sich vorteilhafterweise während der Einlaufphase von Verbrennungsmotoren einsetzen, nach der das Kühlmittel aus dem Kühlkreislauf des Motors entfernt und die Motoren zwischengelagert werden.

Die Erfindung wird nun in den nachfolgenden Beispielen erläutert. Dabei wurden die in den Beispielen 1 bis 9 verwendeten erfindungsgemäßen Kühlflüssigkeiten nach der folgenden Vorschrift hergestellt, wobei die in dem entsprechenden Beispiel angegebene Menge der jeweiligen Substanz verwendet wurde.

Etwa 4 Gew.-% destilliertes Wasser werden vorgelegt und anschließend unter Rühren mit 50%-iger KOH-Lösung, Benztriazol, Tolutriazol, 4-Hydroxybenzoesäure und 2-Ethylhexansäure versetzt, wobei ein pH-Wert von ca. 7,5 erreicht wird. Dann werden nacheinander Monoethylenglykol und wässrige Polyvinylpyrrolidon-Lösung zugegeben. Bei einer Temperatur von unter 50°C wird nun mit einer Lösung von Natriummetasilikat X 5 H₂O und Natriumsilikophosphonat in Monoethylenglykol versetzt; anschließend wird Natriumbenzoat zugegeben und anschließend der pH-Wert mit 50%-iger KOH-Lösung auf 9,5 eingestellt. Zum Schluß wird unter Rühren mit der noch fehlenden Menge destilliertem Wasser verdünnt, wobei man eine klare, farblose Flüssigkeit erhält.

Die erfindungsgemäßen wässrigen Mischungen werden im nachfolgenden beschriebenen Dampfraumkorosionstest getestet:

### Beispiele 1 bis 9 und Vergleichsbeispiel 1 bis 5.

### Dampfraumkorrosionstest

Pro Versuch werden drei aus Grauguß-Zylinderbüchsen geschnittene Streifen aus Grauguß mit einer Länge von 130 mm, einer Breite von 15-25 mm und einer Tiefe von 11mm (ca. Werte) benötigt. Nach dem Entgraten der äußersten Schnittkanten neuer Teststreifen mit einer Feile werden die Streifen mit einem mit Aceton befeuchteten Kleenextuch gereinigt, bis alle anhaftenden Verunreinigungen vollständig entfernt sind.

Drei Zylinderbüchsenstreifen werden senkrecht und jeweils über Kreuz zum nächsten Streifen in ein 1000 ml Becherglas (Fa. Schott, Duran, graduiert, niedrige Form mit Ausguß) gestellt und mit der zu prüfenden Testlösung, die zuvor zum Sieden erhitzt wurde, so übergossen, daß die Zylinderbüchsenstreifen vollständig mit der Testlösung bedeckt sind.
Das Becherglas wird mit einem Uhrglas abgedeckt und eine Stunde bei Raumtemperatur stehen gelassen. Danach wird die Testlösung bis zur 300 ml-Marke abgegossen und das Becherglas dampfdicht mit drei Lagen Parafilm ("M" Laboratory Film, American National Can, Chicago, II. 60631) verschlossen.

Die Zylinderbüchsenstreifen werden in dieser feuchten Atmosphäre 10 Tage bei Raumtemperatur gelagert. Nach dieser Zeit werden sie entnommen, sofort mit destilliertem Wasser und anschließend mit Aceton abgespült und getrocknet. Anschließend erfolgt die visuelle Beurteilung für die Bereiche Dampfraum, Flüssigkeit und für die Grenzfläche zwischen Dampfraum und Flüssigkeit.

Die Versuchsergebnisse sind in der Tabelle 2 aufgeführt. Während bei Verwendung der Vergleichsbeispiele 1 bis 5 im Dampfraum Korrosion an den Grauguß-Teststäben und bei 4 zusätzlich auch in der Flüssigkeit und an der Grenzfläche kein Korrosionsschutz erreicht wurde, konnte die Korrosion durch den Einsatz der erfindungsgemäßen wässrigen Kühlmittel nach den Beispielen 2 bis 9 vollständig verhindert werden. Mit der erfindungsgemäßen Mischung nach Beispiel 1 konnte zwar bereits eine Verbesserung der Korrosionsrate erreicht werden, jedoch war im Dampfraum noch leichte Korrosion zu beobachten.

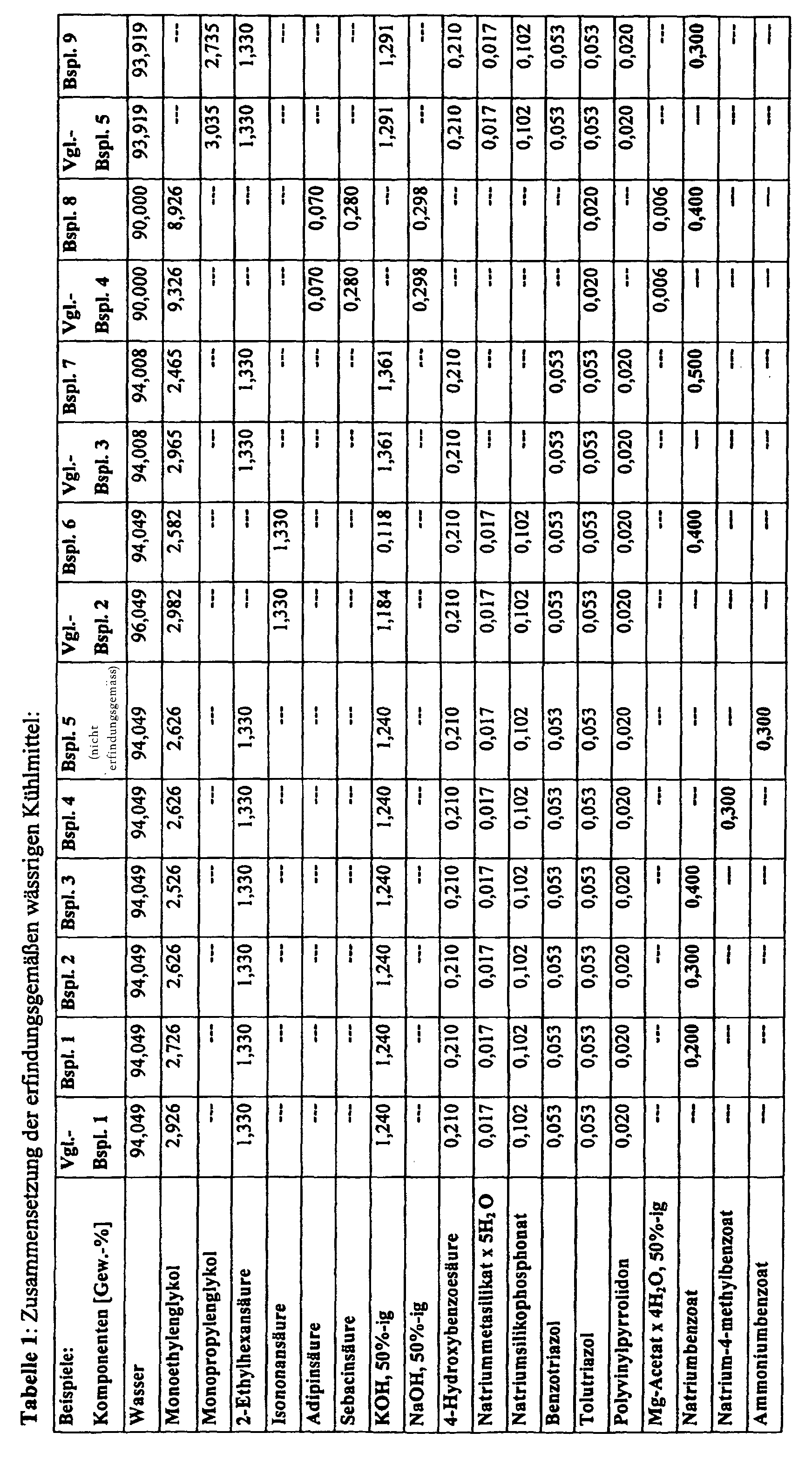

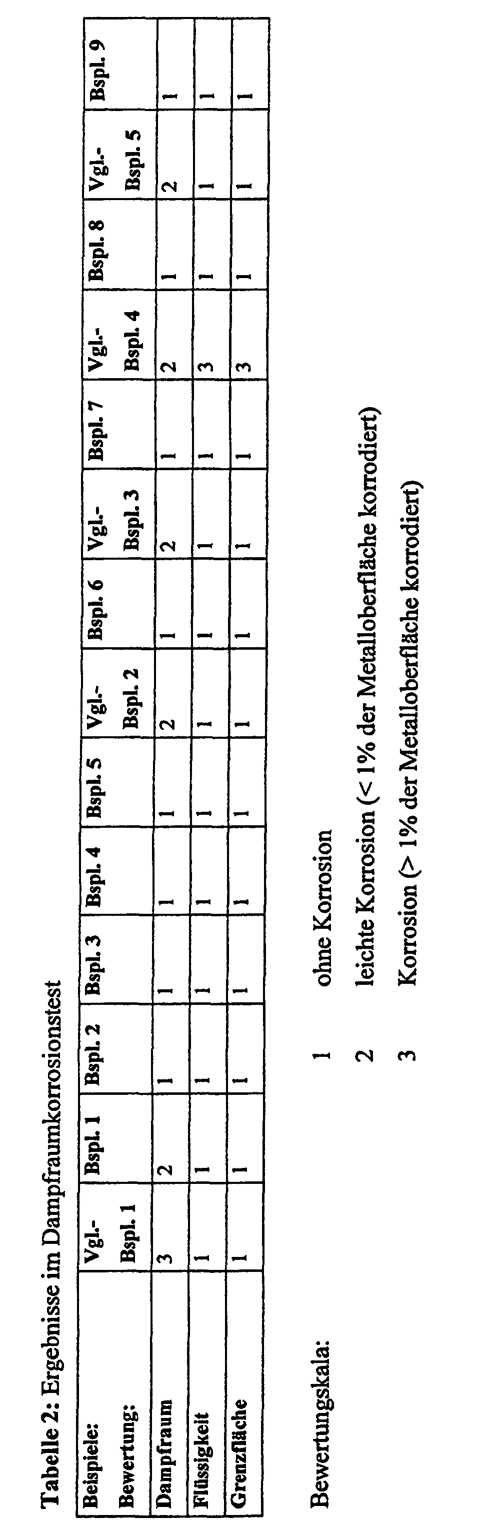

## Patentansprüche

1. Verwendung von Alkalisalzen von Benzoesäure oder einer alkylsubstituierten Benzoesäure als Dampfraumkorrosionsinhibitor in wässrigen Kühlmitteln bei der Einlaufphase von Verbrennungsmotoren, bei denen das Kühlmittel nach erfolgter Einlaufphase aus dem Kühlkreislauf des Motors abgelassen wird.

2. Verwendung nach Anspruch 1, **dadurch gekennzeichnet, dass** das Salz der Benzoesäure oder der alkylsubstituierten Benzoesäure in einer Menge von 0,1 bis 0,8 Gew.-% in dem wässrigen Kühlmittel vorliegt.

3. Verwendung nach Anspruch 1, **dadurch gekennzeichnet, dass** das Salz der Benzoesäure oder der alkylsubstituierten Benzoesäure in einer Menge von 0,2 bis 0,4 Gew.-% in dem wässrigen Kühlmittel vorliegt.

4. Verwendung nach einem der Ansprüche 1 bis 3, **dadurch gekennzeichnet, dass** ein Natriumsalz der Benzoesäure oder der alkylsubstituierten Benzoesäure verwendet wird.

## Claims

1. The use of alkali metal salts of benzoic acid or of an alkyl-substituted benzoic acid as vapor space corrosion inhibitors in aqueous coolants in the run-in phase of internal combustion engines, where the coolant is discharged from the engine cooling circuit after the run-in phase is complete.

2. The use as claimed in claim 1, wherein the salt of the benzoic acid or of the alkyl-substituted benzoic acid is present in the aqueous coolant in an amount of from 0.1 to 0.8% by weight.

3. The use as claimed in claim 1, wherein the salt of the benzoic acid or of the alkyl-substituted benzoic acid is present in the aqueous coolant in an amount of from 0.2 to 0.4% by weight.

4. The use as claimed in any of claims 1 to 3, wherein a sodium salt of the benzoic acid or of the alkyl-substituted benzoic acid is used.

## Revendications

1. Utilisation de sels de métal alcalin d'acide benzoïque ou d'un acide benzoïque substitué par de l'alkyle, comme inhibiteur de corrosion en espace vapeur dans des produits réfrigérants aqueux pour la phase de rodage de moteurs à combustion, dans lesquels le produit réfrigérant est, après que la phase de rodage a eu lieu, soutiré du circuit de refroidissement du moteur.

2. Utilisation suivant la revendication 1, **caractérisée en ce que** le sel de l'acide benzoïque ou de l'acide benzoïque substitué par de l'alkyle se présente en une quantité de 0,1 à 0,8 % en poids dans le produit réfrigérant aqueux.

3. Utilisation suivant la revendication 1, **caractérisée en ce que** le sel de l'acide benzoïque ou de l'acide benzoïque substitué par de l'alkyle se présente en une quantité de 0,2 à 0,4 % en poids dans le produit réfrigérant aqueux.

4. Utilisation suivant l'une des revendications 1 à 3, **caractérisée en ce qu'**on utilise un sel de sodium de l'acide benzoïque ou de l'acide benzoïque substitué par de l'alkyle.
